# EUROPÄISCHE PATENTSCHRIFT

(11) **EP 3 101 256 B1**
(45) Veröffentlichungstag und Bekanntmachung des Hinweises auf die Patenterteilung: **27.11.2019**
(21) Anmeldenummer: 16001014.6
(22) Anmeldetag: 04.05.2016
(51) Int. Cl.: F02D 41/08, F02D 41/14, F02D 37/02, F02D 41/00

(54) **MAGERBETRIEB IM LEERLAUF ZUR PARTIKELZAHLREDUZIERUNG**
LEAN MIXTURE OPERATION AT IDLE FOR REDUCING PARTICLE NUMBER
MODE MAIGRE AU RALENTI POUR LA RÉDUCTION DU NOMBRE DE PARTICULES

(30) Priorität: 01.06.2015 DE 102015006976
(43) Veröffentlichungstag der Anmeldung: 07.12.2016
(73) Patentinhaber: MAN Truck & Bus SE, 80995 München (DE)
(72) Erfinder: Prümm, Franz Werner, 56077 Koblenz (DE)
(74) Vertreter: v. Bezold & Partner Patentanwälte - PartG mbB

(56) Entgegenhaltungen:
- EP-A1- 2 307 691
- WO-A1-2014/184872
- DE-A1- 4 303 332
- DE-A1- 19 706 126
- US-A- 5 803 048
- US-A- 5 913 299
- US-A- 5 947 077
- US-A- 5 954 028
- US-A1- 2010 154 388
- US-A1- 2010 206 267
- US-A1- 2012 179 355
- US-A1- 2012 303 231
- US-A1- 2014 196 702

## Beschreibung

Die Erfindung betrifft ein Betriebsverfahren für eine Vorrichtung, mit einer Verbrennungskraftmaschine, die in einem Magerbetrieb und einem stöchiometrischen Betrieb betrieben werden kann. Ferner sind ein Kurbelgehäuse, zumindest ein Brennraum und vorzugsweise ein Drosselelement, über das Ladeluft von einem Ladeluftkühler dem Brennraum zugeführt werden kann, vorgesehen.

Bei Gasmotoren tritt eine unerwartet hohe Emission an Feinstaubpartikeln auf, was sich in einer hohen Partikelanzahl im, für EURO VI-Motoren vorgeschriebenen Abnahmezyklus WHTC (World Harmonized Transient Cycle) bemerkbar macht. Die Partikelemission ist nicht über den ganzen 30-minütigen Zyklus erhöht, sondern äußert sich in sehr hohen Emissionsspitzen insbesondere nach Leerlaufphasen.

Der Entstehungsmechanismus erklärt sich wie folgt:
Wegen des ottomotorischen Brennverfahrens wird im Leerlauf eine Drosselklappe, über die Ladeluft von einem Ladeluftkühler einem Brennraum zugeführt werden kann, bis auf einen geringen Spalt geschlossen. Im Ansaugkrümmer entsteht ein Unterdruck gegenüber der Umgebung. Während des Ansaugtaktes stellt sich auch im Brennraum des Motors ein Unterdruck ein, weshalb sich im Brennraum auch ein Unterdruck gegenüber dem Kurbelgehäuse des Motors einstellt. In dessen Folge wird Luft aus dem Kurbelgehäuse in den Brennraum gesaugt (Reverse-Blow-By). Durch die Luftbewegung wird Motoröl, aus dem Bereich Laufbuchse/Kolben in den Brennraum gefördert. Durch die geringe Intensivität der Verbrennung im Leerlauf sammelt sich das Öl im Brennraum an. Erfolgt nach einer längeren Leerlaufphase eine Lastzunahme, wird das angesammelte Öl durch die erhöhte Flammenintensivität innerhalb eines kurzen Zeitraumes verbrannt. Es entsteht eine hohe Partikelemission durch unverbrannte Ölrückstände (Ölasche). Verstärkt wird dieser Effekt dadurch, dass die im Brennraum befindliche Ölmenge bei der Kraftstoffzudosierung nicht berücksichtigt wird. Im Brennraum herrscht Sauerstoffmangel, was die Partikelemission befördert.

Aus der US 2012/0179355 A1 ist es bekannt, eine magere Verbrennung in Form einer Schichtladung im Leerlauf einer Brennkraftmaschine durchzuführen.

Eine Aufgabe der Erfindung ist es, eine Möglichkeit zu schaffen, die Anzahl von emittierten Partikeln zu reduzieren.

Diese Aufgabe kann mit den Merkmalen des unabhängigen Anspruchs gelöst werden. Vorteilhafte Weiterbildungen der Erfindung können den abhängigen Ansprüchen und der folgenden Beschreibung bevorzugter Ausführungsformen der Erfindung entnommen werden.

Die Erfindung schafft ein Betriebsverfahren für eine Vorrichtung, aufweisend eine Verbrennungskraftmaschine (z. B. Motor, Gasmotor, Ottomotor oder anderer Verbrennungsmotor, der mit ottomotorischem Brennverfahren betreibbar ist), die in einem Magerbetrieb und einem stöchiometrischen Betrieb betrieben werden kann, ein Kurbelgehäuse, zumindest einen Brennraum und vorzugsweise ein Drosselelement, z. B. eine Drosselklappe, ein Ventil etc., über das Ladeluft von einem Ladeluftkühler dem Brennraum zugeführt werden kann.

Das Betriebsverfahren zeichnet sich insbesondere dadurch aus, dass die Verbrennungskraftmaschine im Leerlauf auf einen Magerbetrieb umgeschaltet und im Magerbetrieb betrieben wird, so dass vorzugsweise ein Unterdruck im Kurbelgehäuse erzeugt und/oder die Druckdifferenz zwischen dem Kurbelgehäuse und dem Brennraum reduzierbar ist.

Bei Verbrennungskraftmaschinen, wie insbesondere Gasmotoren, Ottomotoren oder anderen Verbrennungsmotoren, die mit ottomotorischem Brennverfahren betreibbar sind, sammelt sich im Leerlauf Öl im Brennraum an, was insbesondere bei Lastaufschaltung zu einer hohen Abgas-Partikelemission führt. Um den Öleintrag in den Brennraum zu minimieren, wird im Leerlauf der Verbrennungskraftmaschine erfindungsgemäß auf Magerbetrieb umgeschaltet.

Die verringerte Druckdifferenz zwischen dem Brennraum und dem Kurbelgehäuse bewirkt zweckmäßig einen reduzierten Öleintrag in den Brennraum und/oder ein reduziertes Reverse-Blow-By, mit der Folge einer reduzierten Abgaspartikelzahlemission.

Durch die Umschaltung im Leerlauf auf Magerbetrieb wird der Luftbedarf erhöht, insbesondere deutlich erhöht. Dem Brennraum kann, insbesondere über das Drosselelement, Ladeluft von dem Ladeluftkühler zugeführt werden, wobei im Magerbetrieb das Drosselelement zweckmäßig weiter geöffnet ist als im stöchiometrischen Betrieb. In der Folge erhöht sich der Druck in einem Ansaugkrümmer und/oder im Brennraum.

Motoren der Emissionsklasse EURO VI müssen den strengen Abgasbestimmungen der einschlägigen EU-Gesetzgebung genügen. Beim jetzigen Stand der Technik wird üblicherweise die Einhaltung der Emissionsgrenzwerte durch stöchiometrischen Betrieb bei Lambda = 1 im gesamten Kennfeldbereich, mit anschließender Abgasnachbehandlung in einem Dreiwegekatalysator bewerkstelligt.

Durch den Magerbetrieb im Leerlauf ist eine Reduktion der NOx-Emission nicht mehr gegeben. Um den Emissionsgrenzwert für NOx einzuhalten, muss im Leerlauf die NOx-Rohemission sehr gering sein. Durch die geringere Verbrennungstemperatur im Magerbetrieb entsteht während der Verbrennung nur eine geringe NOx-Emission.

Die Oxidation von CO zu C02 in z. B. einem Dreiwegekatalysator ist auch bei der niedrigen Abgastemperatur im Magerbetrieb gegeben. Dagegen ist die Wirksamkeit der Oxidation von Kohlewasserstoffen HC, insbesondere von Methan (CH4) zu Kohlendioxid und Wasser bei der niedrigen Abgastemperatur im Magerbetrieb stark reduziert. Auch hier muss also die Rohemission gering eingestellt werden.

Die Einhaltung der Emissionsgrenzwerte ist durch eine oder mehrere der folgenden Maßnahmen möglich:
- Genaue, adaptive Lambdaregelung an der Aussetzergrenze, insbesondere möglichst nahe der Aussetzergrenze
- optimierte Zündanlage zur Bereitstellung der erforderlichen Zündenergie
- Verwendung moderner Zündstrategien und/oder fortschrittlicher Hochleistungszündanlagen (insbesondere Doppelzündung im Leerlauf, Coronarzündung und/oder Laserzündung)
- Aussetzererkennung mit entsprechenden Maßnahmen (z. B. Erhöhung Zündenergie, Anpassung Zündstrategie und/oder Anfettung des Kraftstoff-Luft-Gemisches).

Grundsätzlich stellt das schlechte Ansprechverhalten von Verbrennungskraftmaschinen im Magerbetrieb bei positiven Lastwechseln ein Problem dar. Dem kann erfindungsgemäß durch geeignete steuerungstechnische Maßnahmen entgegengewirkt werden. So kann bei Lastanforderung aus dem Leerlaufbetrieb unmittelbar vom Magerbetrieb auf einen stöchiometrischen Betrieb umgeschaltet werden. Weil eine höhere Last angefordert wird, kann das zweckmäßig sehr schnell bei konstanter Öffnungsstellung des Drosselelements geschehen. Die weitere Lasterhöhung geschieht vorzugsweise unter Beibehaltung des nunmehr stöchiometrischen Betriebs oder, z. B. zur Ausräumung des in einem Schalldämpfer angesammelten Sauerstoffs, zweckmäßig mit Kraftstoffüberschuss, also im Fettbetrieb.

Die Effektivität des Magerbetriebs steigt mit dem Ausmagerungsgrad, d. h. mit steigendem Lambda an.

Die Zündfähigkeit eines Kraftstoff-Luft-Gemisches ist jedoch durch ein maximales Lambda, die Aussetzergrenze beschränkt.

Die Aussetzergrenze ist unter anderem von der Kraftstoffzusammensetzung abhängig und daher keine konstante Größe. Um den Motor möglichst nahe an der Aussetzergrenze zu betreiben, kann ein Lambdasollwert als Zielwert in ein Kennfeld eingegeben werden und bei angefordertem Magerbetrieb mit Hilfe der Lambdaregelung in einem geschlossenen Regelkreis unter Einbeziehung der Messwerte der Lambdasonden vor einem Katalysator und nach dem Katalysator eingeregelt werden. Die Zündenergie kann mit einem nicht maximalen, aber zweckmäßig hohen, Wert vorgegeben werden. Mittels z. B. eines Drehzahlgebers Nockenwelle und eines Drehzahlgeber Kurbelwelle wird vorzugsweise überwacht, ob die Verbrennung in allen Zylindern stattfindet. Dazu kann die Beschleunigung der Kurbelwelle im Arbeitstakt nach der Zündung des Gemisches betrachtet werden. Findet in dem betrachteten Zeitraum keine messbare Beschleunigung statt, kann das als Zündaussetzer interpretiert werden. Daraufhin wird zweckmäßig die Zündenergie erhöht. Bleibt die Erhöhung der Zündenergie ohne Wirkung, wird das Gemisch, abweichend vom Zielwert im Kennfeld in applizierbaren Schritten vorzugsweise minimal angefettet, bis der Motor stabil, d. h. aussetzerfrei läuft. Anschließend kann die Motorsteuerung langsam das Gemisch wieder verstellen in Richtung des Zielwertes bis dieser erreicht wird, oder erneut Aussetzer erkannt werden. Wird auf Lambda = 1-Betrieb (stöchiometrischen Betrieb) umgeschaltet, kann der aktuelle Lambdasollwert z. B. intern im Motorsteuergerät abgelegt werden. Bei erneutem Magerbetrieb wird dieser Wert zweckmäßig als Lambdasollwert verwendet (Adaption).

Es ist somit möglich, dass im Magerbetrieb eine Lambdaregelung an der Aussetzergrenze, also im Rahmen der Erfindung zweckmäßig nahe, vorzugsweise möglichst nahe an der Aussetzergrenze, durchgeführt wird.

Es ist somit besonders vorteilhaft, wenn im Magerbetrieb eine adaptive Lambdaregelung an der Aussetzergrenze durchgeführt wird.

Es ist somit ebenfalls möglich, dass, zweckmäßig zum Betreiben der Verbrennungskraftmaschine an der Aussetzergrenze, ein Lambda-Sollwert als Zielwert vorgegeben wird, z. B. in ein Kennfeld eingegeben wird, und bei vorzugsweise angefordertem Magerbetrieb mittels einer Lambdaregelung z. B. in einem geschlossenen Regelkreis unter Einbeziehung der Messwerte einer Lambdasonde stromaufwärts und stromabwärts eines Katalysators (z. B. Dreiwegekatalysator) eingeregelt wird.

Die adaptive Lamdbaregelung kann insbesondere eine Überwachung umfassen, ob die Verbrennung in (vorzugsweise allen) Zylindern der Verbrennungskraftmaschine stattfindet, wobei, wenn in dem betrachteten Zeitraum keine messbare Beschleunigung stattfindet, das als Zündaussetzer interpretiert wird und daraufhin die Zündenergie erhöht werden kann, wobei, wenn die Erhöhung der Zündenergie ohne Wirkung bleibt, das Kraftstoff-Luft-Gemisch abweichend von einem Zielwert in applizierbaren Schritten vorzugsweise minimal angefettet wird, bis der Motor aussetzerfrei läuft, und/oder anschließend das Kraftstoff-Luft-Gemisch wieder in Richtung des Zielwertes verstellbar ist, bis dieser erreicht wird, oder erneut zumindest ein Aussetzer erkannt wird, und/oder, wenn auf stöchiometrischen Betrieb umgeschaltet wird, der aktuelle Lambdasollwert, z. B. intern im Motorsteuergerät, hinterlegt wird und bei erneutem Magerbetrieb dieser Lambdasollwert als Lambdasollwert verwendet wird.

Es ist möglich, dass im Magerbetrieb, insbesondere Magerbetrieb an der Aussetzergrenze, zur Einleitung der Verbrennung im Brennraum eine höhere Zündspannung und/oder eine längere Funkendauer ausgeführt wird als im stöchiometrischen Betrieb.

Beim Magerbetrieb an der Aussetzergrenze wird zur Einleitung der Verbrennung eine hohe Zündenergie in Form hoher Zündspannung und/oder langer Funkendauer zumindest einer Zündkerze benötigt. Zur Bereitstellung der erforderlichen Zündenergie ist eine Optimierung der Zündanlage an den Magerbetrieb notwendig. Hier sind insbesondere eine oder mehrere der folgenden Maßnahmen möglich:
- Für Magerbetrieb ausgelegte Zündkerzen mit geringem Elektrodenabstand.
- Zündendstufen oder in Zündmodulen integrierte Zündendstufen, die zur Bereitstellung einer hohen Zündenergie geeignet sind.
- Zündspulen oder in Zündmodulen integrierte Zündspulen, die bei einer hohen Zündspannung die Zündenergie über die Zündkerze mit langer Funkendauer umzusetzen in der Lage sind.
- Durch den Betrieb mit hoher Zündspannung und/oder langer Funkendauer ist ein hoher Verschleiß der Zündkerze bedingt. Es sind daher Motor- oder Zündsteuergeräte erforderlich, die im Magerbetrieb über entsprechend bedatete Schließwinkelkennfelder hohe Zündenergie realisieren können, im stöchiometrischen Betrieb (Lambda=1-Betrieb) jedoch, durch Umschaltung auf andere Schließwinkelkennfelder, geringere Zündenergie bereitstellen, um dadurch den Zündkerzenverschleiß zu reduzieren.

Es ist somit möglich, dass im Magerbetrieb, insbesondere im Magerbetrieb an der Aussetzergrenze, ein oder mehrere andere Zündkerzen-Schließwinkelkennfelder Anwendung finden als im stöchiometrischen Betrieb.

Ferner ist es möglich, dass im Magerbetrieb, insbesondere im Magerbetrieb an der Aussetzergrenze, eine Corona-Zündung und/oder eine Laser-Zündung erfolgt. Es ist ferner möglich, dass im Leerlauf bzw. im Magerbetrieb eine Doppelzündung erfolgt. Dadurch kann sogar eine weitere Magerverschiebung über die Aussetzergrenze einer konventionellen Zündanlage hinaus dargestellt werden.

Es ist möglich, dass bei einer positiven Lastanforderung an die Verbrennungskraftmaschine aus dem Leerlaufbetrieb vom Magerbetrieb auf einen stöchiometrischen Betrieb umgeschaltet wird und das Umschalten vom Magerbetrieb auf den stöchiometrischen Betrieb bei vorzugsweise konstanter Öffnungsstellung des Drosselelements erfolgt, insbesondere bei konstantem Drosselklappenwinkel.

Aus dem Leerlaufbetrieb kann vorzugsweise unmittelbar vom Magerbetrieb auf einen stöchiometrischen Betrieb umgeschaltet werden, insbesondere bei einer positiven Lastanforderung an die Verbrennungskraftmaschine. Eine weitere Lasterhöhung kann z. B. unter Beibehaltung eines stöchiometrischen Betriebs erfolgen oder mit Kraftstoffüberschuss, insbesondere zur Ausräumung von in einem Schalldämpfer angesammeltem Sauerstoff.

Das Abgas von der Verbrennungskraftmaschine wird vorzugsweise einem Abgas-Turbolader und/oder einer Abgasreinigungsanlage zugeführt. Die Abgasreinigungsanlage umfasst vorzugsweise einen Katalysator, z. B. einen Drei-Wege-Katalysator, zweckmäßig mit Schalldämpfer.

Zu erwähnen ist noch, dass als positiver Nebeneffekt des Magerbetriebs im Leerlauf der Kraftstoffverbrauch im Leerlauf reduziert wird, zweckmäßig durch geringere Ladungswechselverluste.

Die Verbrennungskraftmaschine umfasst vorzugsweise einen Motor, Gasmotor oder einen anderen Verbrennungsmotor, zweckmäßig für ein Kraftfahrzeug, vorzugsweise für ein Nutzfahrzeug, insbesondere einen Omnibus oder einen Lastkraftwagen.

Die Erfindung umfasst ferner ein Kraftfahrzeug, insbesondere Nutzfahrzeug, z. B. einen Lastkraftwagen oder einen Omnibus, mit einer Einrichtung (z. B. Steuergerät, Motorsteuergerät etc.), die zur Ausführung des Betriebsverfahrens wie hierin offenbart ausgeführt ist.

Die zuvor beschriebenen Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.

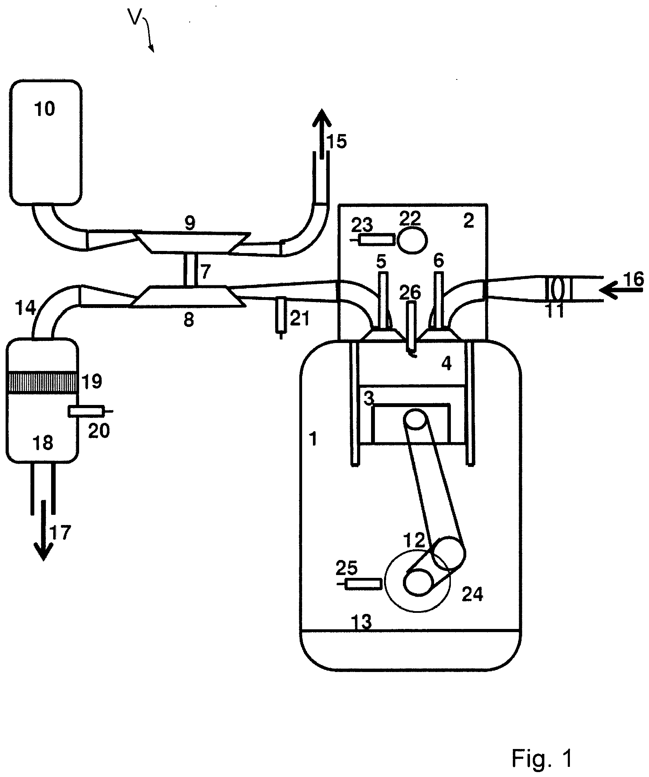

- Figur 1: zeigt eine Vorrichtung, an bzw. mit der ein Betriebsverfahren gemäß einer Ausführungsform der Erfindung ausgeführt werden kann.

Figur 1 zeigt eine Vorrichtung V, an bzw. mit der ein Betriebsverfahren gemäß einer Ausführungsform der Erfindung ausgeführt werden kann. Die Vorrichtung V eignet sich insbesondere für ein Kraftfahrzeug, vorzugsweise ein Nutzfahrzeug, insbesondere einen Omnibus oder einen Lastkraftwagen.

Die Vorrichtung V umfasst, in Verbindung mit einer Verbrennungskraftmaschine, z. B. einem Gasmotor oder einem anderen Verbrennungsmotor, der zweckmäßig mit ottomotorischem Brennverfahren betrieben werden kann, ein Kurbelgehäuse 1, zumindest einen Brennraum 4 und vorzugsweise ein Drosselelement 11, z. B. eine Drosselklappe, über das Ladeluft von einem nicht gezeigten Ladeluftkühler dem Brennraum 4 zugeführt werden kann. Die Verbrennungskraftmaschine kann insbesondere in einem Magerbetrieb (Lambda größer 1) und einem stöchiometrischen Betrieb (Lambda = 1) betrieben werden. Lambda kennzeichnet wie üblich das Verbrennungsluftverhältnis, das das Massenverhältnis aus Luft und Brennstoff in einem Verbrennungsprozess angibt.

Die Vorrichtung V, insbesondere das Kurbelgehäuse 1, umfasst ferner einen Zylinderkopf 2, ein Auslassventil 5, ein Einlassventil 6, eine oder mehrere Zündkerzen 26, einen Kolben 3 und einen Kurbeltrieb 12.

Die Vorrichtung V weist ferner einen Abgasturbolader 7 mit einer Turbine 8 und einem Verdichter 9 auf. Das Bezugszeichen 10 kennzeichnet einen Luftfilter vor dem Verdichter 9.

Die Vorrichtung V umfasst des Weiteren eine Abgasreinigungsanlage 18, insbesondere mit Drei-Wege-Katalysator 19 und einem Schalldämpfer. Das Bezugszeichen 17 kennzeichnet den Abgasaustritt aus der Abgasreinigungsanlage 18, während das Bezugszeichen 14 einen Abgaseintritt in die Abgasreinigungsanlage 18 kennzeichnet.

Die Vorrichtung V umfasst eine Lambdasonde 20 stromabwärts des Katalysators 19 und eine Lambdasonde 21 stromaufwärts des Katalysators 19.

Bezugszeichen 15 kennzeichnet Ladeluft zum Ladeluftkühler, während Bezugszeichen 16 Ladeluft vom Ladeluftkühler kennzeichnet. Die Ladeluft 16 vom Ladeluftkühler wird zweckmäßig über das Drosselelement 11 in den Brennraum 4, insbesondere an das Einlassventil 6 bzw. einen Ladeluftkrümmer geführt.

Bezugszeichen 13 kennzeichnet ein Ölniveau im Kurbelgehäuse 1.

Die Vorrichtung V umfasst ferner eine Nockenwelle 22, einen Drehzahlgeber 23 für die Nockenwelle 22, eine Kurbelwelle 24 und einen Drehzahlgeber 25 für die Kurbelwelle 24.

Die Verbrennungskraftmaschine wird im Leerlauf auf einen Magerbetrieb umgeschaltet und im Magerbetrieb betrieben, so dass zweckmäßig die Druckdifferenz zwischen dem Kurbelgehäuse 1 und dem Brennraum 4 reduziert wird. Die verringerte Druckdifferenz zwischen dem Brennraum 4 und dem Kurbelgehäuse 1 bewirkt einen reduzierten Öleintrag in den Brennraum 4, mit der Folge einer reduzierten Partikelemission.

Durch die Umschaltung im Leerlauf auf Magerbetrieb wird der Luftbedarf deutlich erhöht. Das Drosselelement 11 wird weiter geöffnet als im üblichen stöchiometrischen Betrieb, so dass in der Folge der Druck im Ansaugkrümmer bzw. im Brennraum 4 steigt.

Motoren der Emissionsklasse EURO VI müssen den strengen Abgasbestimmungen der einschlägigen EU-Gesetzgebung genügen. Beim jetzigen Stand der Technik wird die Einhaltung der Emissionsgrenzwerte durch stöchiometrischen Betrieb bei Lambda = 1 im gesamten Kennfeldbereich, mit anschließender Abgasnachbehandlung in einem Dreiwegekatalysator bewerkstelligt.

Durch den Magerbetrieb im Leerlauf ist eine Reduktion der NOx-Emission nicht mehr gegeben. Um den Emissionsgrenzwert für NOx einzuhalten, sollte im Leerlauf die NOx-Rohemission sehr gering sein. Durch die geringere Verbrennungstemperatur im Magerbetrieb entsteht während der Verbrennung nur eine geringe NOx-Emission.

Die Oxidation von CO zu C02 im Dreiwegekatalysator 19 ist auch bei der niedrigen Abgastemperatur im Magerbetrieb gegeben. Dagegen ist die Wirksamkeit der Oxidation von Kohlewasserstoffen HC, insbesondere von Methan (CH4) zu Kohlendioxid und Wasser bei der niedrigen Abgastemperatur im Magerbetrieb stark reduziert. Auch hier sollte also die Rohemission gering eingestellt werden. Die Einhaltung der Emissionsgrenzwerte ist durch folgende Maßnahmen möglich: Genaue, adaptive Lambdaregelung nahe der Aussetzergrenze, optimierte Zündanlage zur Bereitstellung der erforderlichen Zündenergie, Verwendung moderner Zündstrategien und/oder fortschrittlicher Hochleistungszündanlagen (Doppelzündung im LL, Coronarzündung , Laserzündung), und/oder Aussetzererkennung mit entsprechenden Maßnahmen (Erhöhung Zündenergie, Anpassung Zündstrategie, Anfettung des Gemisches).

Die Effektivität des Magerbetriebs steigt mit dem Ausmagerungsgrad, also mit steigendem Lambda an.

Die Aussetzergrenze bzw. ein maximales Lambda beschränken die Zündfähigkeit des Kraftstoff-Luft-Gemischs.

Die Aussetzergrenze ist unter anderem von der Kraftstoffzusammensetzung abhängig und daher keine konstante Größe. Um die Verbrennungskraftmaschine möglichst nahe an der der Aussetzergrenze zu betreiben, wird ein Lambda-Sollwert als Zielwert in ein Kennfeld eingegeben und bei angefordertem Magerbetrieb mittels der Lambdaregelung zweckmäßig in einem geschlossenem Regelkreis unter Einbeziehung von Messwerten der Lambda-Sonde 21 vor dem Katalysator 19 und der Lambda-Sonde 20 nach dem Katalysator 19 eingeregelt. Die Zündenergie zur Zündung des Kraftstoff-Luft-Gemischs wird mit einem zweckmäßig hohen, aber nicht maximalen Sollwert vorgegeben. Mittels insbesondere der Drehzahlgeber-Nockenwelle 23 und Drehzahlgeber-Kurbelwelle 25 kann überwacht werden, ob die Verbrennung in (allen) Zylindern der Verbrennungskraftmaschine stattfindet. Dazu kann insbesondere die Beschleunigung der Kurbelwelle 24 im Arbeitstakt nach der Zündung des Kraftstoff-Luftgemischs betrachtet werden. Findet in dem betrachteten Zeitraum keine messbare Beschleunigung statt, kann das als Zündaussetzer interpretiert werden. Daraufhin kann die Zündenergie erhöht werden. Bleibt allerdings die Erhöhung der Zündenergie ohne Wirkung, kann das Kraftstoff-Luft-Gemisch abweichend vom Sollwert im Kennfeld in vorzugsweise applizierbaren Schritten zweckmäßig minimal angefettet werden, bis die Verbrennungskraftmaschine stabil, insbesondere aussetzerfrei läuft. Anschließend kann das Kraftstoff-Luft-Gemisch wieder in Richtung des Sollwerts eingestellt werden, bis dieser Sollwert erreicht ist, oder erneut ein oder mehrere Aussetzer erkannt werden. Wird auf den stöchiometrischen Betrieb, also Lambda = 1 umgeschaltet, kann der aktuelle Lambda-Sollwert z. B. intern in einem Motorsteuergerät zum Steuern der Verbrennungskraftmaschine abgelegt werden. Bei erneutem Magerbetrieb kann dieser Sollwert als quasi neuer Lambda-Sollwert verwendet werden. Dadurch erfolgt eine Adaption.

Bei einem Magerbetrieb an der Aussetzergrenze wird zur Einleitung der Verbrennung eine hohe Zündenergie in Form hoher Zündspannung und/oder langer Funkendauer benötigt. Zur Bereitstellung der erforderlichen Zündenergie ist eine Optimierung bzw. Anpassung herkömmlicher Zündanlagen notwendig. Mögliche Maßnahmen sind insbesondere: Für Magerbetrieb ausgelegte Zündkerzen mit zweckmäßig geringem Elektrodenabstand, Zündendstufen oder in Zündmodulen integrierte Zündendstufen, die zur Bereitstellung zweckmäßig hoher Zündenergie geeignet sind, Zündspulen oder in Zündmodulen integrierte Zündspulen, die bei einer zweckmäßig hohen Zündspannung die Zündenergie über die Zündkerze mit zweckmäßig langer Funkendauer umzusetzen in der Lage sind, und/oder Motor- und/oder Zündsteuergeräte, die im Magerbetrieb über entsprechend bedatete Schließwinkelkennfelder zweckmäßig hohe Zündenergie realisieren können, hingegen im stöchiometrischen Betrieb durch Umschaltung auf andere Schließwinkelkennfelder, geringere Zündenergie bereitstellen können, um dadurch insbesondere den Zündkerzenverschleiß reduzieren zu können.

Für den Magerbetrieb geeignete Zündkonzepte sind z. B. die Corona-Zündung und/oder die Laser-Zündung. Wenn derartige Zündanlagen für den Serieneinsatz verfügbar sind, bieten diese ein hohes Potenzial hin zu einer weiteren Magerverschiebung über die Aussetzergrenze einer konventionellen Zündanlage hinaus.

Ein weiteres Problem stellt das schlechte Ansprechverhalten von Motoren im Magerbetrieb bei positiven Lastwechseln dar. Dem kann das Betriebsverfahren durch geeignete steuerungstechnische Maßnahmen entgegenwirken. So kann bei Lastanforderung aus dem Leerlaufbetrieb unmittelbar vom Magerbetrieb auf einen stöchiometrischen Betrieb umgeschaltet werden. Weil eine höhere Last angefordert wird, kann das zweckmäßig sehr schnell bei konstanter Öffnungsstellung des Drosselelements 11 geschehen. Die weitere Lasterhöhung geschieht vorzugsweise unter Beibehaltung des nunmehr stöchiometrischen Betriebs oder, z. B. zur Ausräumung des in dem Schalldämpfer angesammelten Sauerstoffs, zweckmäßig mit Kraftstoffüberschuss, also im Fettbetrieb.

### Bezugszeichenliste

- 1: Kurbelgehäuse
- 2: Zylinderkopf
- 3: Kolben
- 4: Brennraum
- 5: Auslassventil
- 6: Einlassventil
- 7: Abgasturbolader
- 8: Turbine
- 9: Verdichter
- 10: Luftfilter
- 11: Drosselklappe
- 12: Kurbeltrieb
- 13: Ölniveau
- 14: Abgas zur Abgasanlage
- 15: Ladeluft zum Ladeluftkühler
- 16: Ladeluft vom Ladeluftkühler
- 17: Abgasaustritt
- 18: Abgasreinigungsanlage, insbesondere umfassend (Dreiwege-) Katalysator und zweckmäßig Schalldämpfer
- 19: Katalysator, insbesondere Dreiwegekatalysator
- 20: Lambdasonde nach Katalysator
- 21: Lambdasonde vor Katalysator
- 22: Nockenwelle
- 23: Drehzahlgeber Nockenwelle
- 24: Kurbelwelle
- 25: Drehzahlgeber Kurbelwelle
- 26: Zündkerze
- V: Vorrichtung

## Patentansprüche

1. Betriebsverfahren für eine Vorrichtung (V), mit einer Verbrennungskraftmaschine, die in einem Magerbetrieb und einem stöchiometrischen Betrieb betreibbar ist, einem Kurbelgehäuse (1) und zumindest einem Brennraum (4), wobei die Verbrennungskraftmaschine im Leerlauf auf einen Magerbetrieb umgeschaltet und im Magerbetrieb betrieben wird, so dass die Druckdifferenz zwischen dem Kurbelgehäuse (1) und dem Brennraum (4) reduziert wird, **dadurch gekennzeichnet, dass** im Magerbetrieb eine Lambdaregelung an der Aussetzergrenze durchgeführt wird und/oder der Magerbetrieb an der Aussetzergrenze durchgeführt wird.

2. Betriebsverfahren nach Anspruch 1, wobei die Vorrichtung (V) ein Drosselelement (11) aufweist, wobei dem Brennraum (4) über das Drosselelement (11) Ladeluft von einem Ladeluftkühler zugeführt wird und im Magerbetrieb das Drosselelement (11) weiter geöffnet ist als im stöchiometrischen Betrieb.

3. Betriebsverfahren nach Anspruch 1, wobei an der Aussetzergrenze eine adaptive Lambdaregelung durchgeführt wird.

4. Betriebsverfahren nach einem der vorhergehenden Ansprüche, wobei zum Betreiben der Verbrennungskraftmaschine an der Aussetzergrenze ein Lambda-Sollwert als Zielwert vorgegeben wird und bei angefordertem Magerbetrieb mittels einer Lambdaregelung in einem geschlossenen Regelkreis unter Einbeziehung von Messwerten von Lambdasonden (20, 21) vor und nach einem Katalysator (19) eingeregelt wird.

5. Betriebsverfahren nach einem der vorhergehenden Ansprüche, wobei ein aktueller Lambda-Sollwert, zweckmäßig im Motorsteuergerät zum Steuern der Verbrennungskraftmaschine, hinterlegt wird, wenn von dem Magerbetrieb auf den stöchiometrischen Betrieb umgeschaltet wird, und bei erneutem Magerbetrieb der vormals aktuelle Lambda-Sollwert als neuer Lambda-Sollwert verwendet wird.

6. Betriebsverfahren nach einem der vorhergehenden Ansprüche, wobei die vorzugsweise adaptive Lambdaregelung eine Überwachung umfasst, ob eine Verbrennung in Zylindern der Verbrennungskraftmaschine stattfindet, wozu vorzugsweise eine Beschleunigung einer Kurbelwelle (24) im Arbeitstakt nach Zündung des Kraftstoff-Luft-Gemischs betrachtet wird, wobei, wenn in dem betrachteten Zeitraum keine messbare Beschleunigung stattfindet, die Zündenergie zur Zündung des Kraftstoff-Luft-Gemischs erhöht wird, wobei, wenn die Erhöhung der Zündenergie ohne Wirkung bleibt, das Kraftstoff-Luft-Gemisch abweichend vom Lambda-Zielwert angefettet wird, bis die Verbrennungskraftmaschine aussetzerfrei läuft, wobei anschließend das Kraftstoff-Luft-Gemisch in Richtung des Lambda-Zielwertes verstellt wird, bis dieser erreicht wird, oder erneut zumindest ein Aussetzer erkannt wird.

7. Betriebsverfahren nach einem der vorhergehenden Ansprüche, wobei im Magerbetrieb zur Einleitung der Verbrennung im Brennraum (4) eine höhere Zündspannung und/oder eine längere Funkendauer ausgeführt wird als im stöchiometrischen Betrieb.

8. Betriebsverfahren nach einem der vorhergehenden Ansprüche, wobei im Magerbetrieb ein oder mehrere andere Zündkerzen-Schließwinkelkennfelder Anwendung finden als im stöchiometrischen Betrieb.

9. Betriebsverfahren nach einem der vorhergehenden Ansprüche, wobei im Magerbetrieb eine Doppelzündung, eine Corona-Zündung und/oder eine Laser-Zündung erfolgt.

10. Betriebsverfahren nach einem der vorhergehenden Ansprüche, wobei bei einer positiven Lastanforderung an die Verbrennungskraftmaschine aus dem Leerlaufbetrieb vom Magerbetrieb auf einen stöchiometrischen Betrieb umgeschaltet wird und das Umschalten vom Magerbetrieb auf den stöchiometrischen Betrieb bei konstanter Öffnungsstellung des Drosselelements (11) erfolgt.

11. Betriebsverfahren nach einem der vorhergehenden Ansprüche, wobei bei einer positiven Lastanforderung an die Verbrennungskraftmaschine aus dem Leerlaufbetrieb unmittelbar vom Magerbetrieb auf einen stöchiometrischen Betrieb umgeschaltet wird.

12. Betriebsverfahren nach Anspruch 10 oder 11, wobei eine weitere Lasterhöhung unter Beibehaltung eines stöchiometrischen Betriebs erfolgt oder mit Kraftstoffüberschuss.

13. Betriebsverfahren nach einem der vorhergehenden Ansprüche, wobei Abgas von der Verbrennungskraftmaschine einem Abgas-Turbolader und/oder einer Abgasreinigungsanlage zugeführt wird.

14. Betriebsverfahren nach Anspruch 13, wobei die Abgasreinigungsanlage einen Drei-Wege-Katalysator und/oder einen Schalldämpfer umfasst.

15. Kraftfahrzeug, insbesondere Nutzfahrzeug, mit einer Einrichtung, die zur Ausführung des Betriebsverfahrens nach einem der vorhergehenden Ansprüche ausgeführt ist.

## Claims

1. Operating method for an apparatus (V), having an internal combustion engine which can be operated in a lean mode and a stoichiometric mode, a crankcase (1) and at least one combustion chamber (4), wherein the internal combustion engine is switched to a lean mode during idling and is operated in the lean mode, with the result that the pressure difference between the crankcase (1) and the combustion chamber (4) is reduced, **characterized in that**, in the lean mode, a lambda control process is carried out at the misfire limit and/or the lean mode is carried out at the misfire limit.

2. Operating method according to Claim 1, wherein the apparatus (V) has a throttle element (11), wherein charge air from a charge air cooler is fed to the combustion chamber (4) via the throttle element (11), and the throttle element (11) is opened further in the lean mode than in the stoichiometric mode.

3. Operating method according to Claim 1, wherein an adaptive lambda control process is carried out at the misfire limit.

4. Operating method according to one of the preceding claims, wherein a lambda setpoint value is predefined as a target value in order to operate the internal combustion engine at the misfire limit, and when lean mode is requested, said value is adjusted by means of a lambda control process in a closed-loop control circuit using measured values of lambda probes (20, 21) upstream and downstream of a catalytic converter (19).

5. Operating method according to one of the preceding claims, wherein a current lambda setpoint value is expediently stored in the engine control device for controlling the internal combustion engine if switching over from the lean mode to the stoichiometric mode takes place, and in the case of renewed lean mode the previously current lambda setpoint value is used as the new lambda setpoint value.

6. Operating method according to one of the preceding claims, wherein the preferably adaptive lambda control process comprises monitoring whether combustion takes place in cylinders of the internal combustion engine, for which purpose acceleration of a crankshaft (24) in the working stroke is preferably considered after ignition of the fuel-air mixture, wherein if measurable acceleration does not take place in the considered time period, the ignition energy for igniting the fuel-air mixture is increased, wherein if the increase in ignition energy has no effect, the fuel-air mixture is enriched in a way which deviates from the lambda target value until the internal combustion engine runs free of misfires, wherein the fuel-air mixture is subsequently adjusted in the direction of the lambda target value until the latter is reached, or at least one misfire is detected again.

7. Operating method according to one of the preceding claims, wherein a higher ignition voltage and/or a longer spark duration than in the stoichiometric mode is implemented in the lean mode in order to initiate the combustion in the combustion chamber (4).

8. Operating method according to one of the preceding claims, wherein in the lean mode one or more spark plug closing angle characteristic diagrams which are different than in the stoichiometric mode are used.

9. Operating method according to one of the preceding claims, wherein in the lean mode a double ignition, a Corona ignition and/or a laser ignition takes place.

10. Operating method according to one of the preceding claims, wherein in the case of a positive load request to the internal combustion engine, switching over takes place out of the idling mode from the lean mode to a stoichiometric mode, and the switching over from the lean mode to the stoichiometric mode takes place in the case of a constant opening position of the throttle element (11).

11. Operating method according to one of the preceding claims, wherein in the case of a positive load request to the internal combustion engine, switching over takes place out of the idling mode directly from the lean mode to a stoichiometric mode.

12. Operating method according to Claim 10 or 11, wherein a further increase in load takes place while maintaining a stoichiometric mode or with excess fuel.

13. Operating method according to one of the preceding claims, wherein exhaust gas is fed from the internal combustion engine to an exhaust gas turbocharger and/or an exhaust gas purification system.

14. Operating method according to Claim 13, wherein the exhaust gas purification system comprises a three-way catalytic converter and/or a silencer.

15. Motor vehicle, in particular utility vehicle, having a device which is designed to carry out the operating method according to one of the preceding claims.

## Revendications

1. Procédé de fonctionnement pour un dispositif (V), comprenant une machine à combustion interne, qui peut fonctionner dans un régime pauvre et dans un régime stœchiométrique, un carter de vilebrequin (1) et au moins une chambre de combustion (4), la machine à combustion interne au ralenti étant permutée sur un régime pauvre et fonctionnant au régime pauvre, de sorte que la différence de pression entre le carter de vilebrequin (1) et la chambre de combustion (4) est réduite, **caractérisé en ce que** dans le régime pauvre, une régulation lambda est effectuée à la limite du raté et/ou le régime pauvre est exécuté à la limite du raté.

2. Procédé de fonctionnement selon la revendication 1, le dispositif (V) possédant un élément d'étranglement (11), de l'air de suralimentation étant acheminé à la chambre de combustion (4) par le biais de l'élément d'étranglement (11) depuis un refroidisseur d'air de suralimentation et l'élément d'étranglement (11) étant davantage ouvert en régime pauvre qu'en régime stœchiométrique.

3. Procédé de fonctionnement selon la revendication 1, une régulation lambda adaptative étant effectuée à la limite du raté.

4. Procédé de fonctionnement selon l'une des revendications précédentes, une valeur lambda de consigne étant prédéfinie en tant que valeur cible pour faire fonctionner la machine à combustion interne à la limite du raté et étant réglée dans une boucle de régulation fermée au moyen d'une régulation lambda lorsque le régime pauvre est exigé par intégration de valeurs mesurées de sondes lambda (20, 21) avant et après un catalyseur (19).

5. Procédé de fonctionnement selon l'une des revendications précédentes, une valeur lambda de consigne actuelle étant enregistrée de manière opportune dans le contrôleur de moteur en vue de commander la machine à combustion interne lors de permutation du régime pauvre au régime stœchiométrique, et l'ancienne valeur lambda de consigne actuelle étant utilisée comme nouvelle valeur lambda de consigne lors d'un nouveau régime pauvre.

6. Procédé de fonctionnement selon l'une des revendications précédentes, la régulation lambda de préférence adaptative comprenant une surveillance destinée à vérifier si une combustion a lieu dans les cylindres de la machine à combustion interne, une accélération d'un vilebrequin (24) en phase de travail après l'allumage du mélange carburant-air étant de préférence observée à cet effet, l'énergie d'allumage nécessaire à l'allumage du mélange carburant-air étant augmentée si aucune accélération mesurable n'a lieu dans la période considérée, le mélange carburant-air étant enrichi différemment de la valeur lambda cible si l'augmentation de l'énergie d'allumage reste sans effet jusqu'à ce que la machine à combustion interne fonctionne sans raté, le mélange carburant-air étant ensuite décalé en direction de la valeur lambda cible jusqu'à ce que celle-ci soit atteinte ou qu'au moins un raté soit de nouveau reconnu.

7. Procédé de fonctionnement selon l'une des revendications précédentes, dans lequel, en régime pauvre, une tension d'allumage et/ou une durée d'étincelle plus longue étant appliquée qu'en régime stœchiométrique en vue d'initier la combustion dans la chambre de combustion (4).

8. Procédé de fonctionnement selon l'une des revendications précédentes, dans lequel, en régime pauvre, un ou plusieurs diagrammes caractéristiques d'angle de came de bougie d'allumage utilisés étant différents qu'en régime stœchiométrique.

9. Procédé de fonctionnement selon l'une des revendications précédentes, un double allumage, un allumage par décharge corona et/ou un allumage par laser étant effectués en régime pauvre.

10. Procédé de fonctionnement selon l'une des revendications précédentes, une permutation du régime pauvre à un régime stœchiométrique étant effectuée dans le cas d'une demande de charge positive à la machine à combustion interne depuis le régime de ralenti et la permutation du régime pauvre au régime stœchiométrique étant effectuée avec une position d'ouverture constante de l'élément d'étranglement (11).

11. Procédé de fonctionnement selon l'une des revendications précédentes, une permutation du régime pauvre à un régime stœchiométrique étant effectuée immédiatement dans le cas d'une demande de charge positive à la machine à combustion interne depuis le régime de ralenti.

12. Procédé de fonctionnement selon la revendication 10 ou 11, une augmentation de charge supplémentaire étant effectuée en conservant un régime stœchiométrique ou avec surplus de carburant.

13. Procédé de fonctionnement selon l'une des revendications précédentes, les gaz d'échappement de la machine à combustion interne étant acheminés à un turbocompresseur des gaz d'échappement et/ou à un système de purification des gaz d'échappement.

14. Procédé de fonctionnement selon la revendication 13, le système de purification des gaz d'échappement étant un catalyseur à trois voies et/ou un silencieux.

15. Véhicule automobile, notamment véhicule utilitaire, comprenant un appareil destiné à mettre en œuvre le procédé de fonctionnement selon l'une des revendications précédentes.
